Europäisches Patentamt

European Patent Office

Office européen des brevets

(19)

(11) Veröffentlichungsnummer: **0 071 668**
**B1**

(12) **EUROPÄISCHE PATENTSCHRIFT**

(45) Veröffentlichungstag der Patentschrift: **21.01.87**

(51) Int. Cl.⁴: **B 62 D 27/06,** E 05 C 3/04

(21) Anmeldenummer: **81106282.7**

(22) Anmeldetag: **12.08.81**

(54) **Verschluss für die Verbindung von Bordwänden bei Kippern oder Pritschenfahrzeugen.**

(43) Veröffentlichungstag der Anmeldung:
**16.02.83 Patentblatt 83/07**

(45) Bekanntmachung des Hinweises auf die
Patenterteilung:
**21.01.87 Patentblatt 87/04**

(84) Benannte Vertragsstaaten:
**AT BE CH DE FR GB IT LI LU NL SE**

(56) Entgegenhaltungen:
**DE-C- 697 649**
**DE-U-8 027 207**
**FR-A-1 377 840**

(73) Patentinhaber: **Karl Hildebrand GmbH & Co. KG**
**Bessemerstrasse 9**
**D-4006 Erkrath (DE)**

(72) Erfinder: **Hildebrand, Karl**
**Bessemerstrasse 9**
**D-4006 Erkrath (DE)**

(74) Vertreter: **Weber, Otto Ernst, Dipl.-Phys.**
**Hofbrunnstrasse 36**
**D-8000 München 71 (DE)**

Courier Press, Leamington Spa, England.

## Beschreibung

Die Erfindung betrifft einen Verschluß für in der Schließstellung anliegende, herunterklappbare Bordwände eines Kippers oder Pritschenfahrzeuges, wie er im Oberbegriff des Anspruches 1 beschrieben ist.

Verschlüsse dieser Art sind während der Benutzung verhältnismäßig großen mechanischen Beanspruchungen ausgesetzt. In vielen Fällen läßt die hierfür erforderliche Festigkeit des Verschlusses zu wünschen übrig. Andere Verschlüsse weisen den Nachteil auf, daß verhältnismäßig oft Verletzungen des Bedienungspersonals auftreten, die unbedingt zu vermeiden sind. Gelegentlich sind auch Verschlüsse bekannt geworden, die zu einer Selbstöffnung neigen, wenn Beschädigungen der Sicherungsorgane auftreten.

Ein Verschluß der eingangs genannten Art ist aus der DE—C 697 649 bekannt. Dieser Verschluß beruht darauf, daß die Bordwände in ihrer Vertikalstellung durch Reibschluß zwischen dem Exzenter und dem Verschlußbolzen gehalten werden. Prinzipbedingt sind große Bedienungskräfte erforderlich, um die Endstellung des Exzenterverschlusses zu erreichen. Ferner ist auch in der Endstellung keinesfalls sichergestellt, daß sich der Exzenterhebel im Betrieb nicht selbsttätig löst. Es besteht die Gefahr, daß durch Relativbewegungen zwischen dem Verschlußbolzen und dem Exzenter der Verschlußhebel öffnet. Deshalb ist bei dem bekannten Verschluß zur Arretierung des Exzenterhebels in der Endstellung eine zusätzlich zu betätigende Sicherungseinrichtung, bestehen aus einem Sicherungshebel und einer Sicherungsnase, erforderlich.

Von diesem Stand der Technik ausgehend liegt der Erfindung die Aufgabe zugrunde, einen Verschluß für in der Schließstellung anschlagende, herunterklappbare Bordwände eines Kippers oder Pritschenfahrzeuges zu schaffen, welcher bei äußerst einfachem und robustem Aufbau im Verriegelungszustand eine Selbstöffnung mit sehr großer Sicherheit verhindert und bei welchem zugleich sowohl im Verriegelungszustand als auch bei einer Entriegelung Verletzungen des Bedienungspersonals weitgehend ausgeschlossen sind.

Diese Aufgabe wird gemäß dem kennzeichnenden Teil des Anspruches 1 gelöst.

Weiterbildungen der Erfindung ergeben sich aus den Unteransprüchen.

Der technische Fortschritt der Erfindung besteht darin, daß die beiden plattenformigen Teile des Verschlusses eine große mechanische Festigkeit infolge ihrer besonderen Ausbildung aufweisen, so daß eine Selbstöffnung des Verschlusses mit Sicherheit verhindert wird. Der Verschluß ist ferner so ausgebildet, daß er leicht hantierbar ist und Verletzungen des Bedienungspersonals nicht auftreten konnen.

In den Zeichnungen sind zwei Ausführungsbeispiele der Erfindung dargestellt.

In den Zeichnungen zeigen:

Fig. 1 die Ansicht der ersten Ausführungsform der Erfindung;

Fig. 2 zeigt eine Schnittdarstellung der ersten Ausführungsform;

Fig. 3 zeigt eine Innenansicht der Grundplatte der ersten Ausführungsform;

Fig. 4 zeigt eine Aufsicht auf die erste Ausführungsform;

Fig. 5 zeigt eine Innenansicht des Drehriegels der ersten Ausführungsform;

Fig. 6 zeigt eine Ansicht der zweiten Ausführungsform für an eine Eckrunge anschlagende Bordwände;

Fig. 7 zeigt eine Schnittdarstellung der zweiten Ausführungsform;

Fig. 8 zeigt eine Innenansicht der Grundplatte der zweiten Ausführungsform;

Fig. 9 zeigt eine Ansicht der zweiten Ausführungsform mit teilweise ausgeschwenktem Griff;

Fig. 10 zeigt eine Innenansicht des Drehriegels der zweiten Ausführungsform.

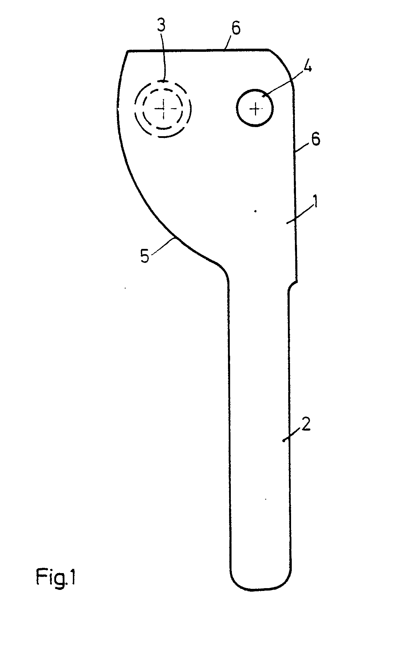

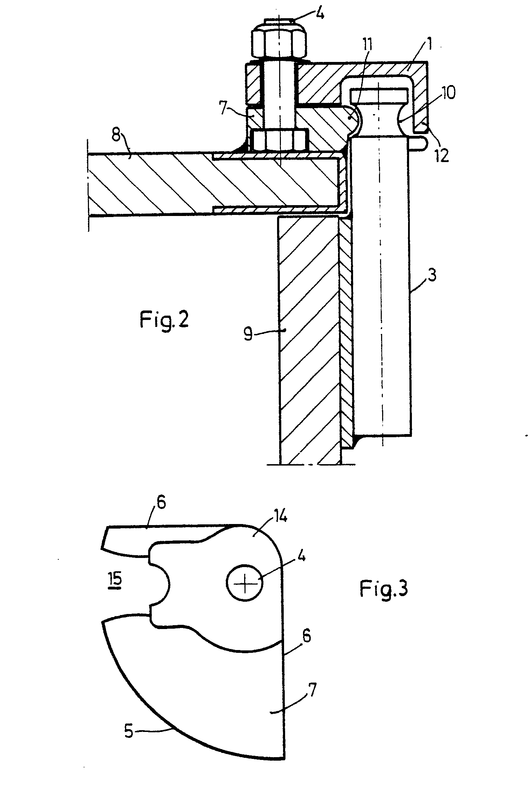

Fig. 1 zeigt die Ansicht der ersten Ausführungsform mit dem Drehriegel 1 und dem Bedienungsgriff 2. Mit 3 ist das Verschlußglied bezeichnet. 4 ist der Kopfbolzen, um den der Drehriegel 1 verschwenkbar ist. Die Darstellung zeigt einerseits die bogenförmige und andererseits die rechteckige Begrenzung die mit den Bezugszeichen 5 und 6 versehen sind. Die Darstellung in Fig. 2 ist eine Schnittansicht, die die bereits erwähnten Teile, nämlich den Drehriegel 1, das Verschlußglied 3 und den Kopfbolzen 4 erkennen läßt. Mit 7 ist die Grundplatte bezeichnet, die bei diesem Ausführungsbeispiel durch Schweissung an der vorderen Bordwand 8 befestigt ist. Die Darstellung zeigt ferner die Befestigung des Verschlußgliedes 3 an der seitlichen Bordwand 9, die herunterklappbar ausgebildet ist. Das Verschlußglied 3 hat am Kopf eine abgerundete Ausdrehung 10, in die die Grundplatte 7 mit einem entsprechend ausgebildeten Vorsprung 11 eingreift. Die Zeichnung läßt ferner den bis zur Grundplatte reichenden Randstreifen 12 erkennen, mit dem sich der Drehriegel 1 gegen die Grundplatte abstützt. Da dieser Randstreifen 12 längs der bogenförmigen Begrenzung 5 angeordnet ist und einen Teil des Drehriegels 1 darstellt, entsteht hierdurch eine erhebliche Versteifung des Drehriegels 1, wodurch die Lebensdauer des Verschlusses erhöht wird. Durch Verdrehung des Drehriegels 1 wird der Kopf des Verschlußgliedes freigegeben, so daß das Verschlußglied 3 mit der seitlichen Bordwand 9 heruntergeklappt werden kann.

Fig. 3 zeigt eine Innenansicht der Grundplatte der ersten Ausführungsform. Die Grundplatte 7 weist im Bereich des Kopfbolzens 4 eine flanschförmige Verstärkung 14 auf wodurch die Festigkeit der Grundplatte erheblich vergrößert wird. Die Darstellung läßt ferner schematisch den Kopfbolzen 4 erkennen und ferner die Fangöffnung 15 für den Kopf des Verschlußgliedes 3. Die Darstellung läßt ferner die rechteckige Begrenzung 6 und die bogenförmige Begrenzung 5 der Grundplatte erkennen.

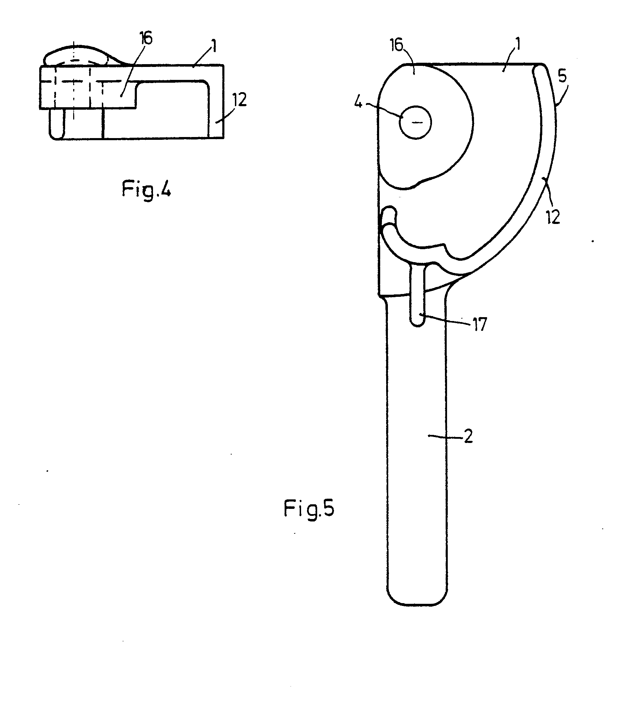

Fig. 4 lässt die Aufsicht des Verschlusses gemäß Fig. 1 erkennen und insbesondere die Form des Drehriegels 1 mit dem Randstreifen 12 mit dem Verstärkungsflansch 16 der mit dem Drehriegel 1 ein zusammenhängendes Gußstück bildet.

Fig. 5 zeigt die Innenansicht des Drehriegels 1 der ersten Ausführungsform. Die Darstellung läßt gemeinsam mit Fig. 1 auch die Anordnung des Bedienungsgriffes 2 erkennen. Der bereits erwähnte Randstreifen 12 erstreckt sich längs der bogenförmigen Begrenzung 5 des Drehriegels sowie den flanschförmigen Ansatz 16 im Bereich des Kopfbolzens 4. Der Ansatz 17 zum Randstreifen 12 dient zur Verstärkung des Ansatzes für den Bedienungsgriff 2.

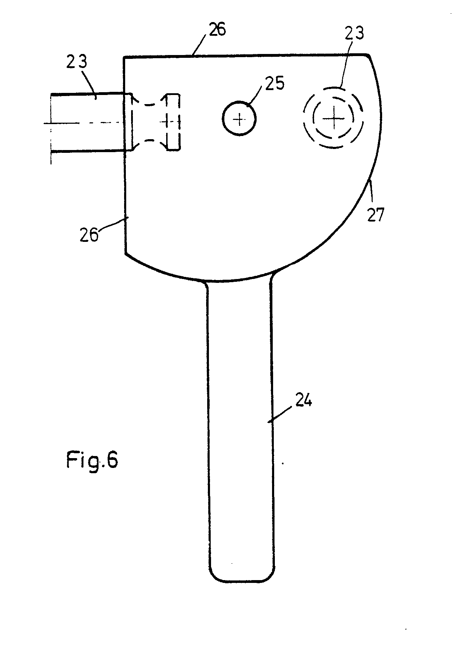

Die Darstellung in Fig. 6 zeigt eine Ansicht der zweiten Ausführungsform die dazu dient, die an eine Eckrunge anschlagenden beiden Bordwände zu verriegeln, weshalb bei dieser Ausführungsform zwei gegenüberliegende Verschlußglieder 23 vorgesehen sind. Mit 25 ist die Position des Kopfbolznes bezeichnet. Wie bei der ersten Ausführungsform ist der dargestellte Drehriegel mit zwei rechteckigen Begrenzungen 26 und einer bogenförmigen Begrenzung 27 versehen.

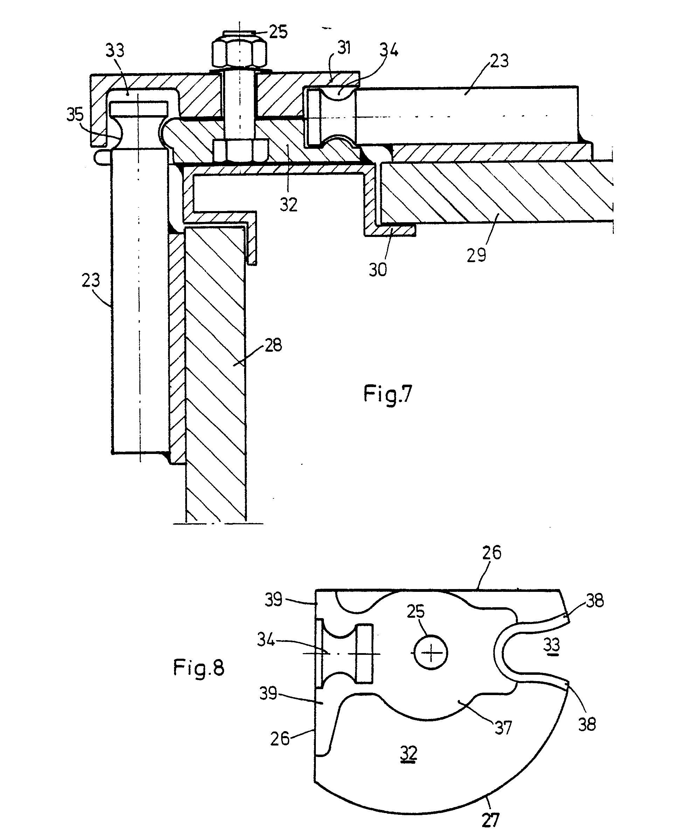

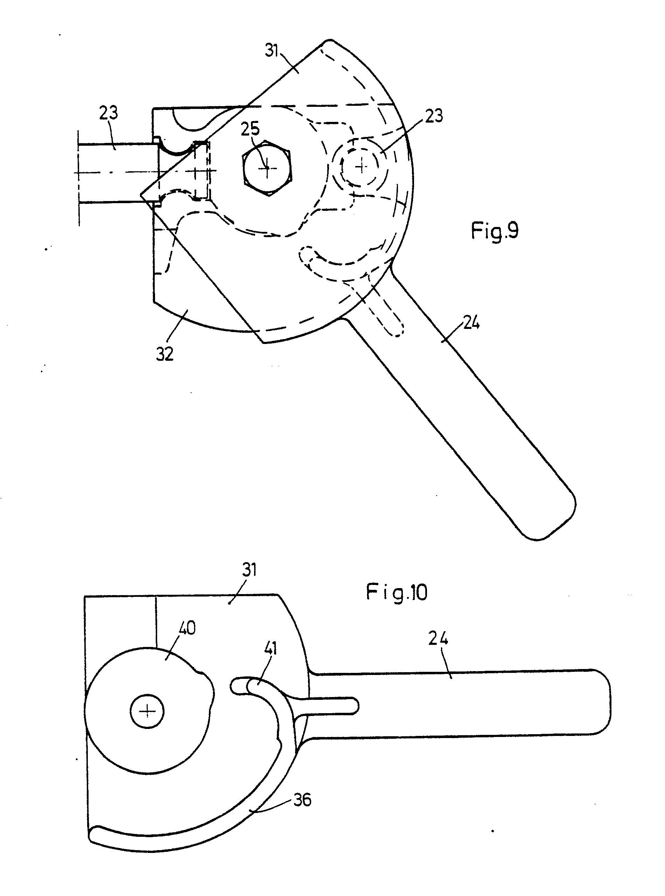

Fig. 7 zeigt eine Schnittdarstellung der zweiten Ausführungsform mit den Verschlußgliedern 23 für die beiden Bordwände 28 und 29, die an die Eckrunge 30 anschlagen. Der Drehriegel ist mit 31 und die Grundplatte mit 32 bezeichnet, die an der Eckrunge durch Schweißung befestigt ist. Der Kopfbolzen ist mit 25 bezeichnet. Die Fangsöffnungen für die Verschlußglieder 23 sind mit 33 und 34 gekennzeichnet. Die Darstellung läßt ferner erkennen, daß die Grundplatte 32 mit einem Vorsprung in die Eindrehung 35 eines Verschlußgliedes 23 eingreift. Ein Verschlußglied 23 ist senkrecht zur Achse des Kopfbolzens 25 und das andere Verschlußglied 23 parallel zu dieser Achse angeordnet. Durch Verschwenken des Drehriegels 1 können die Verschlußglieder 23 verriegelt werden; ferner kann jedes Verschlußglied 23 für sich oder beide gemeinsam freigegeben werden, so daß wahlweise entweder jede Bordwand 28 und 29 geöffnet und jede Bordwand für sich verriegelt werden kann. Die Betätigung ergibt sich ferner aus der Darstellung in Fig. 9.

Fig. 8 zeigt die Innenansicht der Grundplatte 32 der zweiten Ausführungsform. Im Bereich des Kopfbolzens 25 ist eine flanschförmige Verstärkung vorgesehen, die ein zusammenhängendes Stück mit der Grundplatte 32 darstellt. Im Bereich der Fangöffnungen 33 und 34 sind Erhöhungen 38, 39 zum Fassen der Köpfe der Verschlußglieder 23 vorgesehen. Zwischen der flanschförmigen Verstärkung 37 der Grundplatte und der entsprechenden Flanschverstärkung 40 im Drehriegel ist ein Führungskontakt vorgesehen.

Fig. 9 zeigt die zweite Ausführungsform der Erfindung bei einer vollzogenen Schwenkbewegung des Drehriegels 31 in einer Position, bei der die Fangöffnung links teilweise bereits freigegeben wurde.

Fig. 10 zeigt die Innenansicht des Drehriegels 31. Der Randstreifen 36 dient als Versteifung des Drehriegels und als Führung gegenüber der Grundplatte 32. Eine angesetzte Rippe 41 dient zur Verstärkung des Anschlusses des Bedienungsgriffes 24 an den Drehriegel 31. Im Bereich des Kopfbolzens 25 ist eine flanschförmige Verstärkung 40 vorgesehen, die einen Berührungskontakt mit der entsprechenden flanschförmigen Verstärkung 37 an der Grundplatte 32 bildet.

**Patentanspruche**

1. Verschluß für in der Schließstellung anliegende, herunterklappbare Bordwände eines Kippers oder Pritschenfahrzeuges, mit einer an einem feststehenden Bordwandabschnitt (8; 30) befestigten Grundplatte (7; 32) aus welcher ein als Drehachse dienender Kopfbolzen (4; 25) abragt, mit einem Drehriegel (1; 24), der um den Kopfbolzen (4; 25) schwenkbar gelagert ist und der zur Verriegelung eines an einer abklappbaren Bordwand (9; 28) befestigten, mit einer Ringnut (10; 35) versehenen Verschlußgliedes (3; 23) eine Rippe (12; 36) aufweist, die in etwa in Schwenkrichtung des Drehriegels gebogen ist und das Verschlußglied im Verriegelungszustand übergreift, dadurch gekennzeichnet, daß die Grundplatte (7; 32) zur Aufnahme des Verschlußgliedes (3; 23) eine Fangöffnung (15; 33) mit einem im Anlagebereich des Verschlußgliedes (3; 23) komplementär zur Ringnut (10; 35) ausgebildeten Wulst (11) aufweist, daß sich die gebogene Rippe (12; 36) über ihre gesamte Längserstreckung bis zur Grundplatte (7; 32) erstreckt, daß der Drehriegel (1; 24) in dem Bereich, in welchem er die Grundplatte (7, 32) in der Verriegelungsstellung überlappt, eine im wesentlichen zur Grundplatte (7; 32) übereinstimmende Umfangskontur aufweist, und daß die Grundplatte (7; 32) und der Drehriegel (1; 24) aus Guß bestehen.

2. Verschluß nach Anspruch 1, dadurch gekennzeichnet, daß die Grundplatte (7, 32) und der Drehriegel (1, 31) zur Führung des Kopfbolzens jeweils einen angegossenen Flansch (14, 16, 37, 40) aufweisen, deren Stirnflächen einander zur Führung des Drehriegels (1, 31) gegenüberliegen.

3. Verschluß nach Anspruch 1 oder 2, dadurch gekennzeichnet, daß der Kopfbolzen (4) in der Verlängerung eines am Drehriegel (1, 31) angeordneten Handgriffs (2, 24) angeordnet ist.

4. Verschluß nach einem der vorhergehenden Ansprüche, dadurch gekennzeichnet, daß die Grundplatte (32) zwei bezüglich des Kopfbolzens (25) gegenüberliegende, senkrecht zueinander ausgerichtete Fangöffnungen (33, 34) zur Aufnahme von zwei Verschlußgliedern (23) aufweist, die an zwei, an einer Eckrunge (30) anschlagenden Bordwänden (28) angeordnet sind, so daß ein Verschlußglied senkrecht zur Achse des Kopfbolzens (25) und das andere Verschlußglied parallel zu dieser Achse eingreift, und daß der Drehriegel (31) die eine Fangöffnung (33) mit der Rippe (36) und die andere Fangöffnung (34) mit einem plattenförmigen, parallel zur Grundplatte (32) verlaufenden Teil abschließt.

**Revendications**

1. Fermeture pour ridelles d'un véhicule à plateau ou à benne basculante, pouvant être rabattues en se touchant dans la position fermée, cmportant une embase (7, 32) fixée à un segment de ridelle fixe (8, 30), à partir de laquelle embase se dresse un goujon à tête (4, 25) servant d'axe tournant, avec un verrou tournant (1, 24) qui est placé de façon à pouvoir tourner autour du goujon à tête (4, 25) et qui présente un rebord (12, 36) pour le verrouillage d'un élément de fermeture (3, 23), muni d'une rainure annulaire (10, 35), fixé à une ridelle rabattable (9, 28), rebord qui est courbé approximativement dans la direction de pivotement du verrou tournant et qui recouvre l'élément de fermeture en position de verrouillage, caractérisée en ce que l'embase (7, 32) présente, pour le logement de l'élément de fermeture (3, 23), un trou de positionnement (15, 33) avec un renflement (11) de forme complémentaire par rapport à la rainure annulaire (10, 35) dans la zone de fixation de l'élément de fermeture (3, 23), en ce que le rebord courbé (12, 36) s'étend sur toute sa longueur jusqu'à l'embase (7, 32), en ce que le verrou tournant (1, 24) présente un contour correspondant pratiquement à l'embase (7, 32) dans la zone dans laquelle il recouvre l'embase (7, 32) dans la position de verrouillage, et en ce que l'embase (7, 32) et le verrou tournant (1, 24) sont constitués en fonte.

2. Fermeture selon la revendication 1, caractérisée en ce que l'embase (7, 32) et le verrou tournant (1, 3) présentent chacun, pour le guidage du goujon à tête, une bride attenante (14, 16, 37, 40) dont les faces externes s'opposent pour le guidage du verrou tournant (1, 31).

3. Fermeture selon la revendication 1 ou 2, caractérisée en ce que le goujon à tête (4) est disposé dans le prolongement d'une poignée (2, 24) disposée sur le verrou tournant.

4. Fermeture selon l'une quelconque des revendications précédentes, caractérisée en ce que l'embase (32) présente, pour le logement de deux éléments de fermeture (23), deux trous de positionnement (33, 34) en directions perpendiculaires l'un par rapport à l'autre, opposés par rapport au goujon à tête (25), qui sont disposés sur deux ridelles (28) accrochées à une cornière (30), de sorte qu'un élément de fermeture s'accroche perpendiculairement à l'axe du goujon à tête (25) et l'autre élément de fermeture s'accroche parallèlement à cet axe, et que le verrou tournant (31) obture un des trous de positionnement (33) avec le rebord (36) et l'autre trou de positionnement (34) avec une partie en forme de plaque, s'étendant parallèlement à l'embase (32).

**Claims**

1. Closure for downwardly hanging sides of a tipper or platform truck and which engage in the closed position, with a base plate (7, 32) fixed to a fixed side section (8, 30) and from which projects a setbolt (4, 25) serving as a pivot pin, with a turning bolt (1, 24) pivotably mounted about the setbolt (4, 25) and which is provided with a rib (12, 36) for locking a closure member (3, 23) fixed to a downwardly flappable side (9, 28) and provided with an annular slot (10, 35), said rib being bent roughly in the pivoting direction of the turning bolt and which engages over the closure member in the locking position, characterized in that for receiving the closure member (3, 23), base plate (7, 32) has a catching opening (15, 33) with a bulge (11) constructed in the engagement area of the closure member (3, 23) and complimentary to the annular slot (10, 35), that the bent rib (12, 36) extends over the entire longitudinal extension thereof up to the base plate (7, 32), that the turning bolt (1, 24) in the area where it overlaps the base plate (7, 32) in the locking position has a circumferential contour substantially coinciding with the base plate (7, 32) and that the base plate (7, 32) and turning bolt (1, 24) are made from cast metal.

2. Closure according to claim 1, characterized in that the base plate (7, 32) and turning bolt (1, 31) have in each case a cast flange (14, 16, 37, 40) for guiding the setbolt and the end faces thereof face one another for guiding the turning bolt (1, 31).

3. Closure according to claims 1 or 2, characterized in that the setbolt (4) is arranged in the extension of a handle (2, 24) positioned on the turning bolt (1, 31).

4. Closure according to one of the preceding claims, characterized in that the base plate (32) has two vertically aligned catching openings (33, 34) facing one another with respect to the setbolt (25) for receiving two closure members (23), which are arranged on two sides (28) engaging on an end stanchion (30), so that one closure member engages at right angles to the axis of setbolt (25) and the other closure member parallel to said axis and that the turning bolt (31) terminates one catching opening (33) with rib (36) and the other catching opening (34) with a platelike part running parallel to base plate (32).

Fig.1

1

Fig. 2

Fig. 3

Fig.4

Fig.5

Fig.6

Fig.7

Fig.8

Fig.9

Fig.10